# EUROPEAN PATENT APPLICATION

(11) **EP 2 813 591 A1**
(43) Date of publication of application: **17.12.2014**
(21) Application number: 14171473.3
(22) Date of filing: 06.06.2014
(51) Int. Cl.: C22C 19/07, C23C 30/00, F01D 5/28

(54) **Co alloy composition and component**

(30) Priority: 11.06.2013 US 201313914834
(71) Applicant: General Electric Company, Schenectady, New York 12345 (US)
(72) Inventor: ONAL, Kivilcim, Greenville, SC South Carolina 29615 (US)
(74) Representative: Bedford, Grant Richard

(57) **Abstract**

A composition useful as a bond coat 210 is provided. The composition includes about 3% to about 7% chromium, about 10% to about 30% nickel, about 12% to about 18% aluminum, about 0.0005% to about 0.15% yttrium, about 0.0% to about 16% strengtheners, balance cobalt, and incidental impurities. Also provided is a component 100 including a substrate 200 having at least one layer of the composition applied thereto.

## Description

The present invention is directed generally to compositions and components having bond coats. More specifically, the present invention is directed to low chromium bond coats.

The operating environment within a gas turbine is both thermally and chemically hostile. For example, operating temperatures within a gas turbine may range from about 1200°F to above 2500°F (about 650°C to above 1370°C). Such high temperatures necessitate the use of specialty alloys with high oxidation resistance. Accordingly, gas turbine hot gas path components are typically made from nickel-based or cobalt-based superalloys.

Significant advances in the high temperature capabilities of hot gas path components have been achieved through the use of coatings capable of protecting the underlying alloys from degradation by oxidation, hot corrosion, etc. For example, thermal barrier coating (TBC) systems are typically used on turbine components to protect the components from the high temperatures during operation. TBC systems are comprised of a thermally insulating ceramic top coat disposed on an oxidation resistant metallic bond coat which is, in turn, applied to the metal substrate forming the component.

MCrAlY bond coats are widely known in the prior art. They are a family of high temperature coatings, wherein M is selected from one or a combination of iron, nickel and cobalt. Conventional MCrAlY-bond coatings typically contain between about 10 percent to about 35 percent chromium (Cr), by weight. Chromium provides excellent hot corrosion resistance and great oxidation resistance at intermediately high temperatures. Around 1600°F (871°C) and above, chromium progressively starts to lose its effectiveness partially by the formation of volatile Cr-oxides. High concentrations of Cr in the bond coat also lead to more prominent interdiffusion between the metallic coating and the substrate to establish chemical equilibrium in the diffusion couple. High concentrations of Cr are not as essential in the modem day hot gas path operating environments.

A bond coat and a turbine component having a bond coat with low chromium would be desirable in the art.

In an exemplary embodiment of the present invention, a composition for a bond coat is provided. The composition includes, by weight, between about 3% to about 7% chromium, about 10% to about 30% nickel, about 12% to about 18% aluminum, about 0.0005% to about 0.15% yttrium, about 0.0% to about 16% strengtheners, the balance cobalt and incidental impurities.

In another exemplary embodiment, a component is provided. The component includes a substrate and at least one layer of a bond coat applied to the substrate. The bond coat includes, by weight, between about 3% to about 7% chromium, about 10% to about 30% nickel, about 12% to about 18% aluminum, about 0.0005% to about 0.15% yttrium, about 0.0 % to about 16% strengtheners, the balance cobalt and incidental impurities.

Various other features and advantages of the present invention will be apparent from the following more detailed description of the preferred embodiment, which illustrates, by way of example, the principles of the invention.

Provided is a composition useful as a bond coat and a component including a substrate having at least one layer of bond coat applied thereto. Embodiments of the present disclosure provide reduced chromium (Cr) of about 3% to about 7% by weight in the bond coats. One advantage of an embodiment of the present disclosure is that reducing Cr levels in the bond coat to the substrate alloy Cr levels (e.g. N500, R108) will eliminate or minimize chromium interdiffusion between the bond coat and the substrate. Another advantage of an embodiment of the present disclosure is that low level Cr additions in the bond coat will enhance external alumina formation by gettering effect. Yet another advantage of an embodiment of the present disclosure is that removing excess Cr in the bond coat will enable adding more aluminum to the bond coat. Another advantage of an embodiment includes controlling concentration of chromium in the bond coat allows for further alloying opportunities to optimize system capability for improved turbine efficiency. Another advantage of an embodiment of the present disclosure is that low levels of chromium will also allow the bond coating to be fortified with strengthening elements such as tungsten, molybdenum, tantalum, carbon, titanium, hafnium, niobium, boron, zirconium, and combinations thereof. Yet another advantage of an embodiment of the present disclosure is a bond coat with improved strength and oxidation resistance. Another advantage of an embodiment of the present disclosure is a low-cost bond coat with higher temperature capability and better thermomechanical fatigue resistance to mitigate bond coat cracking.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

The term "bond coat", as used herein, is a metallic layer deposited on a substrate prior to the deposition of a coating, e.g., thermal barrier coating (TBC).

The term "thermal barrier coating" also abbreviated as "TBC", as used herein, refers to ceramic coatings that are capable of reducing heat flow to the underlying metal substrate of the article, i.e., forming a thermal barrier.

The terms "to deposit", "depositing", "deposited", "to apply", "applied", "disposed", "disposed on", and the like as used to describe forming a layer on a substrate or other layer, mean that the layer is on and in at least partial contact with the substrate or other layer.

The exemplary composition includes cobalt, nickel, aluminum, chromium, yttrium, strengthener, and incidental impurities.

In one embodiment, the composition useful as a bond coat is deposited on all or a portion of a turbine component, such as, a turbine nozzle, a turbine blade, a turbine bucket, a turbine dovetail, and/or any other suitable component.

In one embodiment, the nickel is at a concentration, by weight, of between about 10% to about 30%. In further embodiments, the nickel is at a concentration, by weight, of between about 15% and about 25%, or alternatively between about 18% and about 23%, at about 18%, at about 19%, at about 20%, at about 21%, at about 22%, at about 23%, or any suitable combination, sub-combination, range, or sub-range thereof.

In one embodiment, the aluminum is at a concentration, by weight, of between about 12% to about 16%. In further embodiments, the aluminum is at a concentration, by weight, of between about 13% and about 15%, at about 13%, at about 14%, at about 15%, or any suitable combination, sub-combination, range, or sub-range thereof.

In one embodiment, the chromium is at a concentration, by weight, of between about 3% to about 7%. In further embodiments, the chromium is at a concentration, by weight, of between about 3.5% and about 6.9%, or alternatively between about 3.9% and about 6.5%, at about 4%, at about 5%, at about 6%, or any suitable combination, sub-combination, range, or sub-range thereof.

In one embodiment, the yttrium is at a concentration, by weight, of between about 0.0005% to about 0.15%. In further embodiments, the yttrium is at a concentration, by weight, of between about 0.001 % and about 0.12%, or any suitable combination, sub-combination, range, or sub-range thereof.

In one embodiment, the strengtheners are at a concentration, by weight, of between about 0.0 % to about 16%. In further embodiments, strengtheners are at a concentration, by weight, of up to about 13%, of up to about 10%, or any suitable combination, sub-combination, range, or sub-range thereof. In one embodiment, the strengtheners are selected from tungsten, molybdenum, tantalum, carbon, titanium, hafnium, niobium, boron, zirconium, and combinations thereof.

In one embodiment, the bond coat includes a balance of cobalt. In further embodiments, cobalt is at a concentration, by weight, of between about 45% to about 70%, or any suitable combination, sub-combination, range, or sub-range thereof. In one embodiment, the strengtheners are selected from tungsten, molybdenum, tantalum, carbon, titanium, hafnium, niobium, boron, zirconium, and combinations thereof.

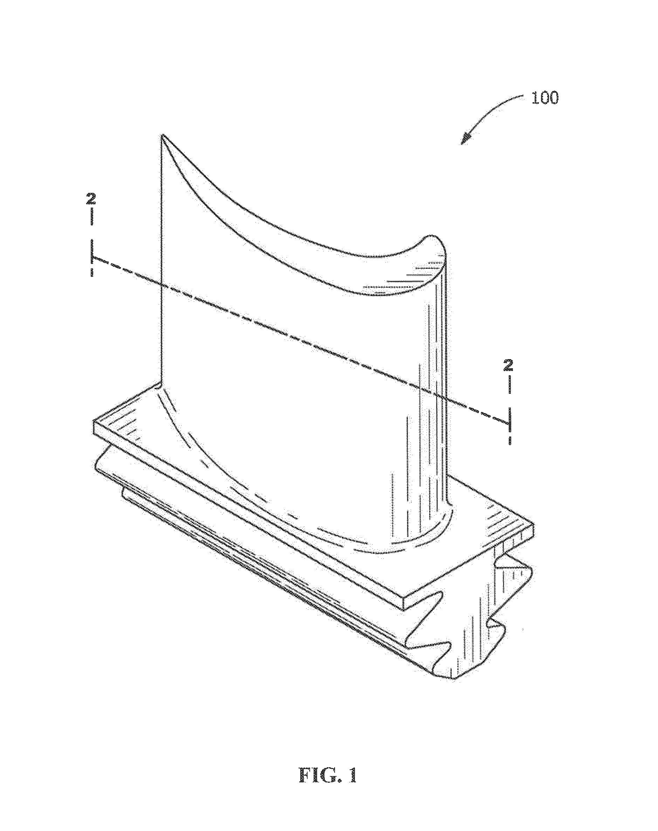

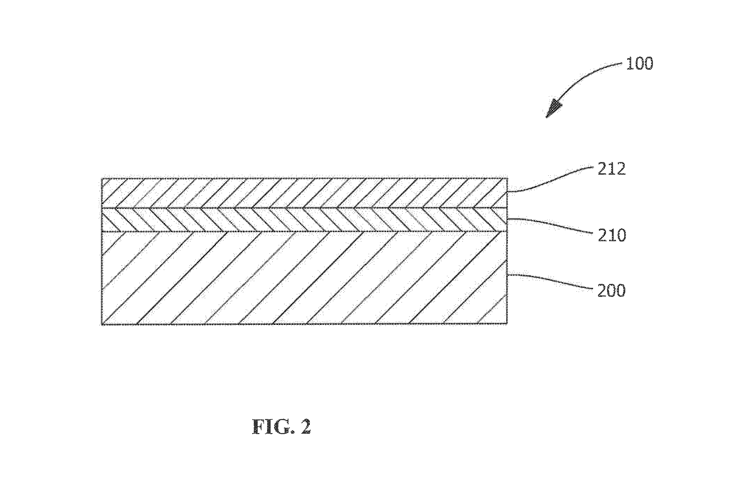

As shown in FIG. 1, a component 100 is provided. Component, may include turbine components such as, but not limited to, turbine casings, buckets or blades, and vanes. As shown in FIG. 2, a substrate 200 of turbine component 100 includes at least one layer of a bond coat 210 applied to substrate 200. Substrate 200 comprises an iron-based superalloy, nickel-based superalloy, cobalt-based superalloy, or a combination thereof. Bond coat 210 may optionally include at least one thermal barrier coating 212 applied thereto. Bond coat 210 comprises, by weight, between about 3% to about 7% chromium, about 10% to about 30% nickel, about 12% to about 18% aluminum, about 0.0005% to about 0.15% yttrium, about 0.0 % to about 16% strengtheners; the balance cobalt and incidental impurities.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention are defined by the following numbered clauses:
1. A composition , comprising, by weight:
   between about 3% to about 7% chromium;
   about 10% to about 30% nickel;
   about 12% to about 18% aluminum;
   about 0.0005% to about 0.15% yttrium;
   about 0.0% to about 16% strengtheners;
   balance cobalt; and incidental impurities.
2. The composition of clause 1, wherein strengtheners are selected from tungsten, molybdenum, tantalum, carbon, titanium, hafnium, niobium, boron, zirconium, and combinations thereof.
3. The composition of any preceding clause, wherein the chromium is at a concentration, by weight, of about 3.5% to about 6.9%.
4. The composition of any preceding clause, wherein the chromium is at a concentration, by weight, of about 3.9% to about 6.5%.
5. The composition of any preceding clause, wherein the nickel is at a concentration, by weight, of about 15% to about 25%.
6. The composition of any preceding clause, wherein the nickel is at a concentration, by weight, of about 18% to about 23%.
7. The composition of any preceding clause, wherein the aluminum is at a concentration, by weight, of about 12% to about 16%.
8. The composition of any preceding clause, wherein the aluminum is at a concentration, by weight, of about 13% to about 15%.
9. The composition of any preceding clause, wherein the yttrium is at a concentration, by weight, of about 0.001 % to about 0.12%.
10. The composition of any preceding clause, wherein the strengtheners are at a concentration, by weight, of up to 13%.
11. The composition of any preceding clause, wherein the strengtheners are at a concentration, by weight, of up to 10%.
12. The composition of any preceding clause, wherein the cobalt is at a concentration, by weight, of about 45% to about 70%
13. The composition of any preceding clause wherein the composition is a bond coat.
14. A component, comprising:
   a substrate;
   at least one layer of a bond coat applied to the substrate, the bond coat comprising, by weight:
      between about 3% to about 7% chromium;
      about 10% to about 30% nickel;
      about 12% to about 18% aluminum;
      about 0.0005% to about 0.15% yttrium;
      about 0.0 % to about 16% strengtheners;
      balance cobalt; and incidental impurities.
15. The component of any preceding clause, further comprising a thermal barrier coating disposed on the at least one layer of bond coating.
16. The component of any preceding clause, wherein the substrate comprises an iron-based superalloy, nickel-based superalloy, cobalt-based superalloy, or a combination thereof.
17. The component of any preceding clause, wherein the chromium is at a concentration, by weight, of about 3.5% to about 6.9%.
18. The component of any preceding clause, wherein the chromium is at a concentration, by weight, of about 3.9% to about 6.5%.
19. The component of any preceding clause, wherein the component is a turbine component.

## Claims

1. A composition , comprising, by weight:
between about 3% to about 7% chromium;
about 10% to about 30% nickel;
about 12% to about 18% aluminum;
about 0.0005% to about 0.15% yttrium;
about 0.0% to about 16% strengtheners;
balance cobalt; and incidental impurities.

2. The composition of claim 1, wherein strengtheners are selected from tungsten, molybdenum, tantalum, carbon, titanium, hafnium, niobium, boron, zirconium, and combinations thereof.

3. The composition of any preceding claim, wherein the chromium is at a concentration, by weight, of about 3.5% to about 6.9%.

4. The composition of any preceding claim, wherein the chromium is at a concentration, by weight, of about 3.9% to about 6.5%.

5. The composition of any preceding claim, wherein the nickel is at a concentration, by weight, of about 15% to about 25%.

6. The composition of any preceding claim, wherein the nickel is at a concentration, by weight, of about 18% to about 23%.

7. The composition of any preceding claim, wherein the aluminum is at a concentration, by weight, of about 12% to about 16%.

8. The composition of any preceding claim, wherein the aluminum is at a concentration, by weight, of about 13% to about 15%.

9. The composition of any preceding claim, wherein the yttrium is at a concentration, by weight, of about 0.001 % to about 0.12%.

10. The composition of any preceding claim, wherein the strengtheners are at a concentration, by weight, of up to 13%.

11. The composition of any preceding claim, wherein the strengtheners are at a concentration, by weight, of up to 10%.

12. The composition of any preceding claim, wherein the cobalt is at a concentration, by weight, of about 45% to about 70%

13. The composition of any preceding claim, wherein the composition is a bond coat (210).

14. A component (100), comprising:
a substrate (200);
at least one layer of a bond coat (210) applied to the substrate (200), the bond coat (210) comprising, by weight:
between about 3% to about 7% chromium;
about 10% to about 30% nickel;
about 12% to about 18% aluminum;
about 0.0005% to about 0.15% yttrium;
about 0.0 % to about 16% strengtheners;
balance cobalt; and incidental impurities.

15. The component (100) of claim 14, further comprising a thermal barrier coating (212) disposed on the at least one layer of bond coating (210).
